# EUROPEAN PATENT SPECIFICATION

(11) **EP 0 952 622 B1**
(45) Date of publication and mention of the grant of the patent: **17.10.2001**
(21) Application number: 98302169.2
(22) Date of filing: 24.03.1998
(51) Int. Cl.: H01M 12/06, H01M 2/20, H01M 10/50

(54) **Cell for a metal-air battery**
Zelle für Metall-Luft Batterie
Elément pour batterie métal-air

(43) Date of publication of application: 27.10.1999
(73) Proprietor: ELECTRIC FUEL (E.F.L.) LIMITED, P.O. Box 23073 Jerusalem 91230 (IL)
(72) Inventor: Kimberg, Sergey, Neve Yaakov, Jerusalem (IL); Gilon, Yoel, Jerusalem (IL); Shrim, Yaron, Pisgat Zeev, Jerusalem (IL); Schneider, Vladimir, Jerusalem (IL); Gutkin, Alex, Jerusalem (IL)
(74) Representative: Baverstock, Michael George Douglas

(56) References cited:
- EP-A- 0 673 076
- EP-A- 0 744 784
- WO-A-93/19495
- FR-A- 2 347 791
- GB-A- 1 225 045
- US-A- 3 592 692

## Description

### BACKGROUND OF THE INVENTION

The present invention relates to a modular cell for a multi-cell metal-air battery system, more particularly for such a system to be used in electrically powered vehicles, as well as to a cooled metal-air battery incorporating said cells.

In European Patent Application No. 94307391.6, published September 20th, 1995 as publication EP-A-0673076, there is described and claimed a modular cell for a multi-cell metal-air battery system, comprising a relatively flat cell housing having two major surfaces and accommodating a pair of oppositely disposed, spaced-apart, air-permeable, liquid-impermeable cathodes in the form of air electrodes defining between themselves a space open towards the upper edges of said cell housing and closed at the lateral edges and the bottom of said cell housing, said space being configured to accommodate an anode of said battery, substantial portions of the major surfaces of said housing being removed, thus exposing major portions of said air electrodes, characterized in that said two major surfaces are partly recessed in such a way as to form, in conjunction with a similarly recessed outer surface of a major wall of an adjacent cell housing, an air space with air access and exits, and that the exposed portions of said air electrodes are supported and reinforced by ribbing constituted at least by a plurality of slender rails, which rails define ducts for guiding a flow of air across said portions of said air electrodes from said air access toward said exits.

Based on the basic modular design described in said patent, batteries for electrical vehicles were prepared and tested and have achieved significant results in powering motor vehicles at speeds of up to 100 kmh for distances up to 400 km without the need for recharging of the batteries.

All electric batteries generate heat during operation, one source thereof being the chemical reaction taking place in the cells, and the second source being the current flow meeting the ohmic resistance of the battery itself. In most batteries, such heat is dissipated naturally, mainly by convection. However, batteries designed to power electric vehicles are designed to provide high power from a compact battery envelope, and may exhibit a high temperature rise if no additional provision is made for cooling. Further aggravating the problem is the consideration that road vehicles need to be designed to allow operation in ambient temperatures as high as 45-50°C; under such conditions, the generated heat may raise battery temperature to a level causing battery damage.

While a high operating temperature is not necessarily detrimental to battery performance, there are several reasons justifying some cooling arrangement in a battery of this type. First, in a naturally cooled battery, the inner cells will operate at a considerably higher temperature than those on the battery perimeter, leading to operating differentials between the cells. Second, it is often advantageous to use the heat removed from the battery for heating the passenger compartment of the vehicle, when required. Third, premature deterioration due to heat of solid and liquid materials in the battery must be prevented.

Cooling systems for electric batteries are described in U.S.-A-754,969; 3,767,468; 4,007,315; 4,463,064; 4,578,324; and 5,212,024. These specifications disclose various systems for circulating a cooling gas such as air, or a liquid such as water, through the battery for removing heat therefrom.

Cooling systems for the electrolyte are described in U.S. Patents 3,290,176; and 5,093,213. While such systems have certain advantages, particularly in achieving electrolyte mixing to even out concentration differences, these systems require pumping means and are more complex and heavier than systems using direct air cooling. Surprisingly, electrolyte cooling systems extract only about 40 watts of heat from each battery cell of a size approximately 24cm by 24cm, e.g., one suitable for use in a battery for road vehicle propulsion.

Systems designed to have a flow of cooling air directed across the tops of metal current collector frames only maintain a removal capacity of about 20 watts for the above-mentioned battery cell size, which is approximately only 25% of the capacity needed in a practical road-vehicle propulsion battery. It is possible to increase the flow rate of reaction air contacting the air electrodes sufficiently to remove any excess heat by using a large blower. This arrangement is well-suited for short-term use, for example, in batteries for torpedo propulsion, which have an operating life of only a few minutes. However, if the air flow rate across the air electrode is much in excess of that required to supply reaction oxygen, it will eventually cause the drying out of the electrolyte from the air electrode, which will cause the cell to have an unacceptable power loss.

Since air contains about 0.0314% by volume of carbon dioxide, which gas is known to be detrimental to a high efficiency operation of metal-air cells, this causes a further impediment to increasing the flow of reaction air sufficiently for use as a cooling medium. Accordingly, the present inventors have proposed a form of scrubber device suitable for use in conjunction with batteries, as described in European Application 95301398.4, published as publication EP-A-0677883. Scrubber devices for removal of CO₂ usually involve the use of a CO₂-absorbent material, for example, granular alkali metal hydroxide or aqueous alkali metal hydroxide absorbed on a porous carrier. No matter whichever absorber material is used, the absorber will become chemically exhausted after extensive use, and require replacement or chemical recharging. Premature absorber exhaustion may be avoided by using the scrubber only for processing the quantity of air containing sufficient oxygen for battery reaction. However, the quantity of air required for battery operation has been found insufficient for achieving a high rate of cooling.

Cooling systems for batteries such as those claimed in European Patent Application No. 94307391.6 are also described and claimed in U.S.-A-5,447,805, which is directed to a modular cell for a multi-cell metal-air battery system, comprising a relatively flat cell housing having two major surfaces and accommodating a pair of oppositely disposed, spaced-apart, air-permeable, liquid-impermeable cathodes in the form of air electrodes defining between themselves a space open towards the upper edges of said cell housing and closed at the lateral edges and the bottom of said cell housing, said space being configured to accommodate an anode of said battery and electrolyte, substantial portions of the major surfaces of said housing being removed, thus exposing major portions of said air electrodes, characterized in that said two major surfaces are partly recessed in such a way as to form, in conjunction with a similarly recessed outer surface of a major wall of an adjacent cell housing, an air space with air access and exits, and that the exposed portions of said air electrodes are supported and reinforced by ribbing constituted at least by a plurality of slender rails, which rails define ducts for guiding a flow of air across said portions of said air electrodes from said air access toward said exits, and further characterized in that an upper portion of at least one major surface of said housing is provided with a fluid flow channel having an inlet and an outlet provided in a wall of a minor surface of said housing for guiding a cooling fluid introduced into said inlet across an upper area of said cell, in heat exchange with electrolyte electrolyte contained in upper portions of said open space, via an inner wall of said housing portion.

In European Patent EP-A-0744784 there is described and claimed an electrochemical zinc-air multi-cell battery, each cell being of the type provided with a housing having a base and two major surfaces and two minor surfaces defining an interior space for containing therein a zinc electrode; at least one generally planar gas-permeable but liquid-impermeable air electrode, each of said least one air electrode being installed in a window opening provided in at least one of the major surfaces; an electrolyte in contact with said zinc electrode and said air electrode; means for directing a flow of reaction air from a scrubber across the outer faces of two adjacently interfacing air electrodes; said battery further having cooling-air, flow-directing means comprising a pair of spaced-apart thin plates positioned between adjacent cells, each thin plate having similar dimensions to salt major surfaces and means being provided for forcing cooling-air to flow between said pair of thin plates, the outer faces of said thin plates being arranged to be in contact with and to cool said reaction air.

The modular cell of European Patent Application No. 94307391.6 consisting of a split cell housing, wherein the two housing halves were exactly identical were cemented together during the assembly of a cell with a seam formed along the periphery of the cell, i.e. along the joined sides, including top and bottom sides, thereof.

This type of peripheral side-by-side welding of two housing halves however, was found to be somewhat problematic as far as leaks were concerned.

Furthermore, the arrangement for directing reaction air across the outer faces of two interfacing air electrodes open to the housing of the battery necessitated the preparation and usage of large volumes of scrubbed reaction air.

In addition, the fabrication of said cells, including the alignment of the two symmetrical half cells for gluing was mechanically difficult.

Another problem encountered was that the electrical interconnection between the current collectors of adjacent cells was exposed and subject to damage, as well as short circuiting.

### SUMMARY OF THE INVENTION

According to the present invention, there is now provided a modular cell for use in an electrochemical zinc-air multi-cell battery, each cell being of the type provided with a housing having two outer major surfaces, and two spaced-apart inner walls, said inner walls defining a first inner chamber for containing therein a zinc electrode, and in conjunction with said outer major surfaces defining two outer chambers for receiving reaction air; two generally planar gas-permeable, but liquid-impermeable air electrodes, each of said electrodes being installed in a window-like opening provided in each of said inner walls; an electrolyte in contact with said zinc electrode and said air electrodes; and means for directing a flow of said reaction air into a first inlet provided in a first outer side surface of said housing through both of said outer chambers substantially in a uniform flow distribution across the outer faces of both of said air electrodes, and out of a second outlet provided in an opposite outer side surface of said housing.

In preferred embodiments of the present invention the modular cell is formed from assymetric split cell halves, wherein a first of said inner walls is provided with a frame-like opening sized to receive and accommodate, in tight friction fit, a second of said inner walls, a bottom and opposing side surfaces of said first inner wall forming the base and sides of said housing respectively and a top portion of said first inner wall constituting a seamless upper portion of the assembled cell.

In especially preferred embodiments of the present invention, each of said inner walls is provided with a peripheral recess sized to accept one of said two outer major surfaces and a window-like opening sized to accept one of said two air electrodes, each of said recesses and each of said openings serving to position one of said electrodes and one of said surfaces and to facilitate the formation of an air-impermeable joint between said outer surfaces and said peripheral recesses.

Preferably said cell is provided with a single inlet and a single outlet for reaction air and said means for directing said flow of reaction air substantially in a uniform flow distribution across said outer faces of both of said air electrodes comprises a series of substantially horizontal rails supported in said window-like opening in said inner wall, the spaces formed between said rails defining upper and lower walls of horizontal ducts directing said reaction air received from said single inlet towards said single outlet.

It will be appreciated that in contradistinction to the design originally contemplated by European Patent Application No. 94307391.6, and the further patents based thereon, the modular cell of the present invention is self-contained with many advantages over that of said previous cell. More specifically, in the previous cell design and the batteries based thereon, reaction air passed between two adjacent cells from a common manifold and if a leak occurred in any cell, electrolyte would then enter into said common manifold.

Furthermore, the air electrodes while partially protected by the supporting and reinforcing ribs positioned on the outer surfaces thereof, nevertheless were subject to damage when an entire cell was withdrawn from the battery for replacement.

In contradistinction thereto, the present invention provides for the first time a self-contained cell, wherein the air electrode is positioned in an internal wall of said double-walled cell and reaction air circulates within each cell, in a reaction air chamber formed by said double walls, between respective surfaces of adjacent inner and outer walls, rather than between adjacent cells.

In the present invention, cooling of the individual cells is preferably carried out by further providing the battery containing said cells with cooling air flow directing means for causing cooling air to flow between two adjacently positioned cells, along the outer faces of the major surfaces of two interfacing adjacent cells, said surfaces respectively being arranged to be in contact with and to cool said reaction air in each of the outer chambers bounded by said respective surfaces.

Thus, in a further preferred aspect of the present invention there is provided an electrochemical zinc-air multi-cell battery, each cell being of the type provided with a housing having two outer major surfaces, and two spaced-apart inner walls, said inner walls defining a first inner chamber for containing therein a zinc electrode, and in conjunction with said outer major surfaces defining two outer chambers for receiving reaction air; two generally planar gas-permeable, but liquid-impermeable air electrodes, each of said electrodes being installed in a window-like opening provided in each of said inner walls; an electrolyte in contact with said zinc electrode and said air electrodes; means for directing a flow of said reaction air into a first inlet provided in a first outer side surface of said housing through both of said outer chambers substantially in a uniform flow distribution across the outer faces of both of said air electrodes, and out of a second outlet provided in an opposite outer side surface of said housing; and cooling air flow directing means for causing cooling air to flow between two adjacently positioned cells, along the outer faces of the major surfaces of two interfacing adjacent cells, said surfaces respectively being arranged to be in contact with and to cool said reaction air in each of the outer chambers bounded by said respective surfaces.

In a preferred embodiment of this aspect of the present invention said cooling air flow directing means include blower means.

In another preferred embodiment of this aspect of the present invention said cooling air flow directing means include vent means provided in said housing for directing natural air flow between said cells.

It will be appreciated that batteries formed from cells according to the present invention have arrangements for two separate air flows, heat being transferred from the reaction air to the cooling air. The two air flows may, however, originate from a single air blower, or preferably from separate sources in order to allow for the use of lower quantities of scrubbed reaction air. Reaction air is supplied in sufficient quantity to operate the battery, while a larger quantity of cooling air is used to extract unwanted heat from the reaction air.

In especially preferred embodiments of the present invention said outer major surfaces of the housing are made of plastic material. It is to be noted that plastics are usually not considered as suitable candidates for use in heat-exchange applications, as metals have heat conductivities which are approximately a thousand times larger than typical solid plastics. This consideration is, however, based on an oversimplified view of what actually transpires when heat is transferred by conduction through a wall. Both the hotter and the cooler surface of the wall are covered by a thin film of the respective medium, air in the present application, in contact which such a wall. The value of the film coefficient depends on many factors, among them thermal conductivity, viscosity, density and specific heat. Precise calculations are complex, but, as a rule, unless flow is turbulent and the heat exchange wall is thick, the resistance to heat flow of each single film is typically many times greater than the resistance of the solid material comprising the wall; there are, of course, two such air films, and the thin film of still air which is in close contact to the wall is a very poor heat conductor.

This consideration is of particular effect in the present invention, where the wall thickness of said outer major surface is very small, approximately one millimeter, and due to limitations on blower power consumption, air flows are expected to be laminar. The end result is that when total heat resistance is considered, and not merely the heat conductivity of the wall material, a thin wall made of a solid plastic is only moderately inferior to a metal in this application.

Plastics have several compensating attractive properties for use in the outer surfaces of the housing in the present invention, such as high electrical resistance, light-weight, low fabrication costs and excellent resistance to chemical attack by the alkaline medium prevalent in batteries of the type described. For example, in comparing an equal thickness of copper to polypropylene, the plastic offers a weight advantage of a factor of 9.9. Such an advantage is of considerable importance in a battery intended for road vehicle propulsion, wherein low weight is a crucial requirement for attaining acceptable vehicle performance.

In especially preferred embodiments of the present invention, said zinc-electrode is formed of a generally planar electrically conductive skeletal member encompassed by an active metal component, comprising porous zinc particles formed into a static bed of slurry impregnated with an electrolyte and said interior space of said housing communicates with an opening opposite said base through which said zinc electrode is removable to enable the mechanical replacement thereof with a freshly charged metal electrode.

In U.S. Patent 5,354,625 there is described and claimed a metal-air power supply and air-manager system and a metal-air cell for use therein However said patent teaches a zinc-air cell with an air electrode cathode on top and a solid cell case on the bottom, wherein the reaction air is directed to a cathode plenum above the top of the cell, while the cooling air is directed to a cooling-air plenum at the bottom of the cell. Thus, it is clear that this patern does not teach or suggest the use of cooling air to cool reaction air, but rathe directs the cooling air to a different face of the cell, i.e. one which has no a cathode.

As stated specifically in column 6, lines 6-13 of said patent, "In addition the stackable tray registers of the cell are formed within the component so the cell cases and the trays form a cathode plenum in each compartment adjacent to the respective air cathode and a cooling air plenum isolated from the air cathode, whereby reactant air may be directed against the air cathodes and cooling air may be directed against a portion of each cell case isolated from the respective air cathode".

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

### BRIEF DESCRIPTION OF THE DRAWINGS

In the drawings:
- Fig. 1: is a perspective, non-detailed fragmented view of a preferred embodiment of a battery incorporating a plurality of modular cells according to the invention;
- Fig. 2: is a perspective, fragmented view of an assembled cell, showing contained electrolyte;
- Fig. 3: is an exploded view of the cell shown in Fig. 2;
- Fig. 3a: is a perspective view of an upper corner of the cell of Fig. 2;
- Fig. 3b: is a perspective view of an upper corner of the cell of Fig. 2, with the closure element removed therefrom;
- Fig. 3c: is a cross-sectional side view of three nested cells;
- Fig. 4: is a schematic view of an embodiment showing a preferred arrangement of the air flows;
- Fig. 5: is a plan view of an embodiment wherein a battery being used in a moving vehicle is provided with vents to collect cooling air;
- Fig. 6: is a view of a cell detail of two spaced-apart inner walls during assembly to form a sealed unit; and
- Fig. 7: is a perspective view of an embodiment provided with means for directing the flow of reaction air in a uniform flow distribution across outer faces of the air electrodes.

### DESCRIPTION OF THE INVENTION

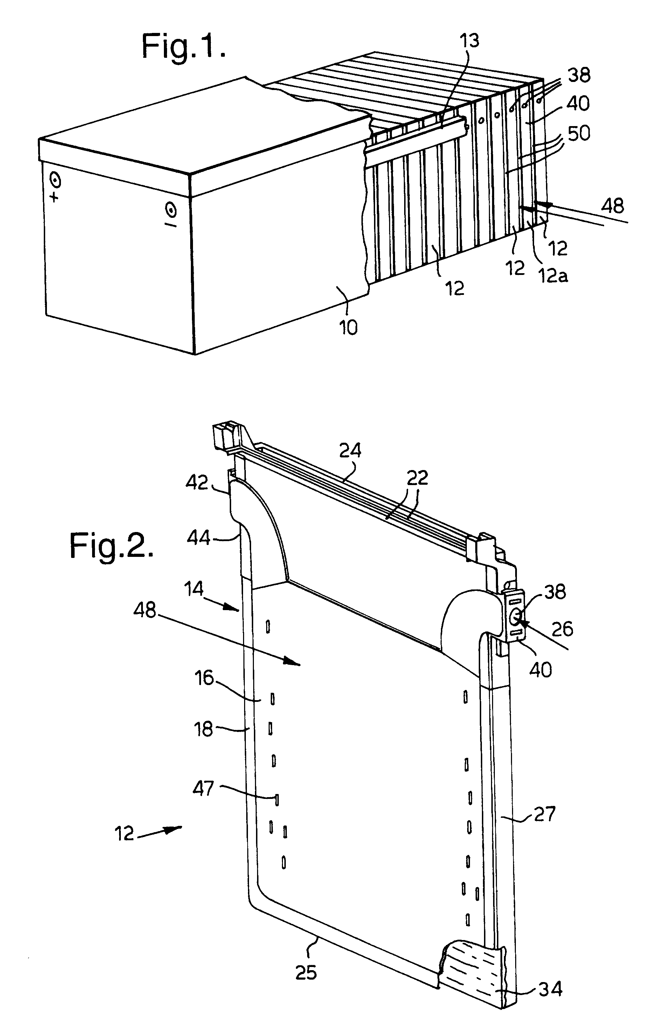

There is seen in Fig. 1 an electrochemical zinc-air multi-cell battery 10, of the type used for multiple discharge and recharge cycles. Battery 10 contains many cells 12, 12a, and is suitable for vehicle propulsion. A manifold 13 feeds reaction air to each of a series of cells within the battery.

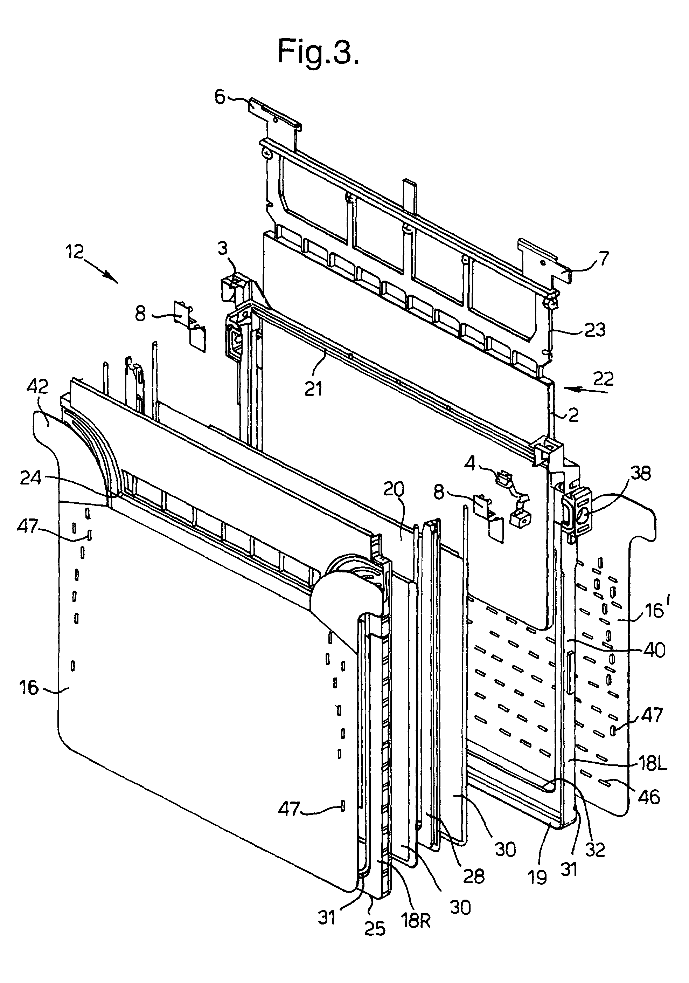

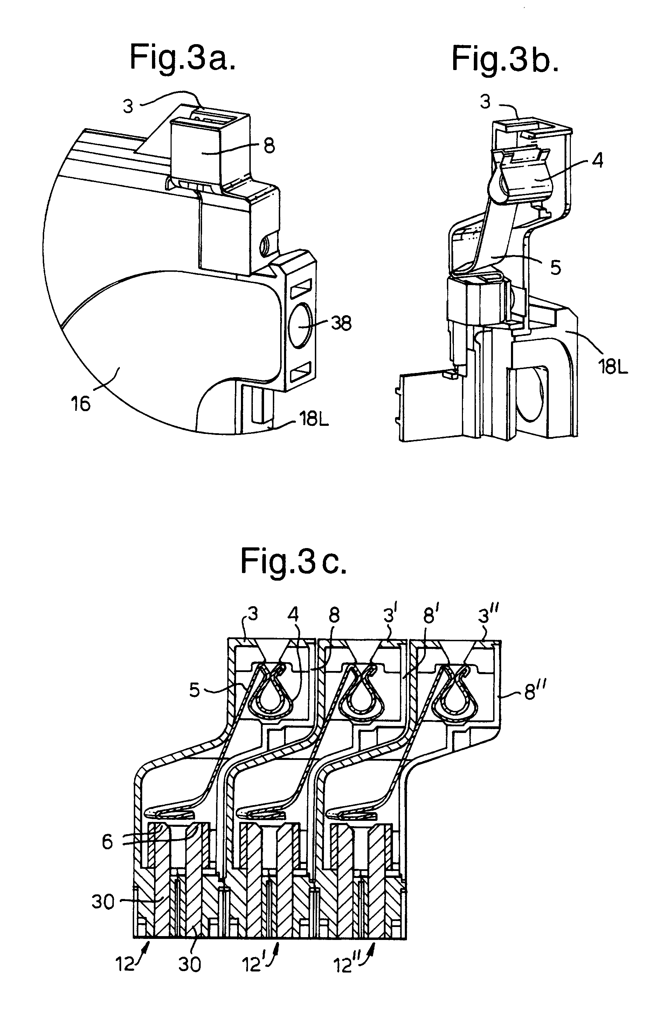

Referring now to Figs. 2 & 3, there is seen in more detail one of the battery cells 12 contained in battery 10.

The cell 12 has a housing 14 having two outer major surfaces 16 and 16' and two spaced-apart inner walls 18. Inner walls 18 define a first inner chamber 20 for containing therein a zinc electrode 22, and in conjunction with outer major surfaces 16 define two outer chambers 24 for receiving reaction air 26.

In the embodiment more clearly seen with reference to figure 3, a first of said inner walls 18L is provided with a frame-like opening 19 sized to receive and accommodate, in tight friction fit, a second of said inner walls 18R, a bottom 25 and opposing side surfaces 40 and 44 of said first inner wall 18L forming the base and sides of said housing 14 respectively and a top portion 21 of said first inner wall constituting a seamless upper portion of the assembled cell.

Zinc electrode 22 is advantageously formed of a generally planar electrically conductive skeletal member 23 encompassed by an active metal component 2, comprising porous zinc particles formed into a static bed of slurry impregnated with an electrolyte. The zinc electrode 22, when in place, is retained in a u-shaped frame 28 and can be withdrawn and replaced by a new zinc electrode 22 when the used electrode is exhausted.

As seen in Fig. 3, which is to be viewed in conjunction with Figs. 3a, 3b and 3c, inner wall 18L is provided with an integral cell contact housing 3, which contains a spring clip contact 4, electrically connected via a metal conductor 5 to the contacts 6 of the air electrode, said clip contact 4 being adapted to receive flanges 7 extending from the anode current collector member 23 of an adjacent cell due to the stepped nesting configuration of the contact housings 3, 3' and 3" of adjacent cells 12, 12' and 12", as seen in Fig. 3c.

Housing 3 is sealed by closure 8, thereby better protecting spring clip 4 and flange 7 from exposure, said housing 3 and said closure 8 being preferably formed of non-conductive KOH-resistant plastic.

As will be realized, the present arrangement allows for internal electrical interconnection between adjacent cells, rather than external connection, as provided by terminal clips 48 seen in Fig. 1 of US Patent 5,447,805.

Outer surfaces 16 and 16' comprise plastic sheets 0.3 to 1.5 mm thick of sufficient strength for protection of air electrode 30 from physical damage during cell handling. Preferred plastics include noryl and polypropylene, due to their light weight and excellent chemical resistance.

Two generally planar gas-permeable, but liquid-impermeable air electrodes 30 are positioned, one on each side of the zinc electrode 22. Each air electrode 30 is installed in a window-like opening 32 provided in each inner wall 18.

Each inner wall 18 is provided with a peripheral recess 31 sized to accept one of two outer major surfaces 16 and a window 32 to accept one of two air electrodes 30. The recesses 31 serve to position outer surfaces 16 and 16', seen in Fig. 3, and to facilitate the formation of an air-impermeable joint between outer surfaces 16 and 16' and peripheral recesses 31. Said joint can be made by using epoxy glue or by ultrasonic welding. Alternatively, major outer surfaces 16 and 16' and inner walls 18 can be molded as a single integral unit.

An electrolyte 34, for example potassium hydroxide, is held in the first inner chamber 20 and contacts the zinc electrode 22 and air electrodes 30.

To provide oxygen required for cell operation, means are provided for directing a flow of reaction air 26 from a first inlet 38 provided in a first outer side surface 40 of the cell housing 14. Reaction air flow divides to pass through both outer chambers 24 substantially in a uniform flow distribution across the outer faces of both air electrodes 30. Reaction air 26, minus the consumed oxygen, exits through a second outlet 42 provided in an opposite outer side surface 44 of the cell housing 14.

Reaction air 26 passing through the cell 12 is significantly heated in the cell 12 due to contact with the hot air electrode 30.

As stated, in the present invention, the heated reaction air 26 may be cooled by cooling air 48 (as represented in Fig. 1), which flows along the outer surfaces 16 and 16' of each cell and effects cooling by heat transfer through said outer surfaces and preferably said reaction air and said cooling air flow in counter-current direction to each other.

In the embodiment shown, cooling air flow directing means include a plurality of outward projections 46 which are provided on at least one of the outer surfaces, in the present embodiment shown only on rear outer surface 16'. Projections 46 act as spacers between adjacent cells and allow cooling air 48 to flow through a space 50, seen in Fig. 1 between two adjacently positioned cells 12 and 12a. For this reason it is sufficient to place projections 46 on only one of said interfacing outer surfaces, although obviously it is possible to provide such projections on both outer surfaces 16 and 16'.

Cooling air 48 does not enter the cell 12, but contacts the two interfacing outer major surfaces 16 and 16' of two interfacing adjacent cells 12 and 12a. Surfaces 16 and 16' are arranged to be in contact with and to cool reaction air 26 in each of the outer chambers 24. Thus, even though high flow rates of cooling air 48 are used, no carbon dioxide contamination of the cell 12 results therefrom. Cell heat is thus removed partially through the reaction air 26 directly, and partially through the cooling air 48 removing heat from the cell outer surfaces 16 and 16'. In a battery having cells 24 cm square, a minimum of 50 watts of heat is removed from each cell 12.

It will be realized that batteries according to the present invention, can also be used for motorcycles and other vehicles in situations wherein cooling air can flow between adjacent cells, as a result of air flow along the battery and between the cells as a result of the vehicle's motion, wherein such spacers or projections 46 are the only means necessary for directing cooling air flow between adjacent cells, while in other closed embodiments said means may include ducts, vents, blowers, and combinations thereof, etc.

Preferably, there are also provided on both of said outer surfaces 16 and 16' inwardly directed projections 47, which further assure the maintenance of the space within outer reaction chambers 24 for the flow of said reaction air, as described hereinbefore.

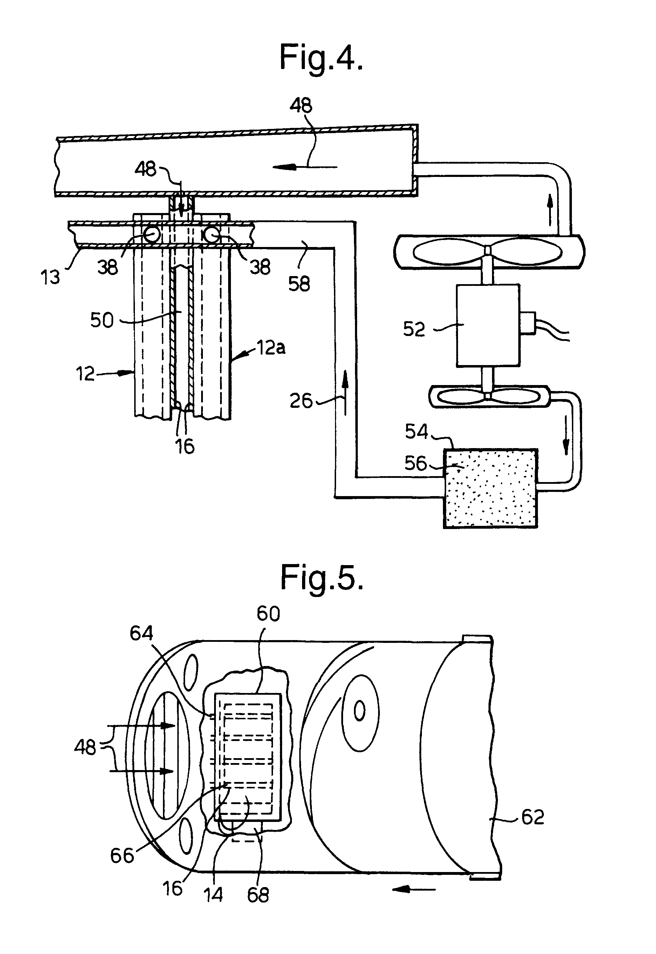

Seen in Fig. 4 is a preferred arrangement of the air flows. Advantageously cooling air flow directing means include blower means 52.

It has been explained that the cell 12 is exposed to two separate air flows, heat being transferred from the reaction air 26 to the cooling air 48. The two air flows in the present embodiment, originate from a single air blower 52. Reaction air 26 is supplied in sufficient quantity to operate the cells 12, while a larger quantity of cooling air 48 is used to extract unwanted heat from the reaction air 26.

Advantageously the flow rate of cooling air 48 exceeds the flow rate of reaction air 26 by a factor of at least two.

Preferably a scrubber 54 is arranged to remove carbon dioxide from the reaction air 26 before said reaction air 26 enters the cell 12. The scrubber 54 contains a CO₂-absorbent material 56, for example, granular alkali metal hydroxide or aqueous alkali metal hydroxide absorbed on a porous carrier. Premature exhaustion of material 56 is avoided by using the scrubber 54 only for reaction air 26. The larger quantities of cooling air 48 which flow over the outer surfaces 16 of the cell 12 do not go through the scrubber 54. The width of space 50 is shown exaggerated for illustrative purposes.

The figure shows a manifold 58 arranged to feed reaction air 26 to inlet 38 of each cell.

Fig. 5 depicts an electrochemical zinc-air multi-cell battery 60 similar to that seen in FIG. 1. The battery 60, being used in a moving vehicle 62, is provided with vents 64 to collect cooling air 48. The battery 60 is oriented to bring the major faces such as the outer surface 16 of the cell housing 14 in line with the direction in which the vehicle 62 moves. Cooling air 48 flow directing means include vent means 66 provided in the cell housing 14 for directing natural air flow between cells. A small blower 68 for the provision of reaction air 26 is optional. The larger blower 52 previously described with reference to Fig. 4 is not required in the present embodiment, thus saving weight, cost and parasitic power consumption.

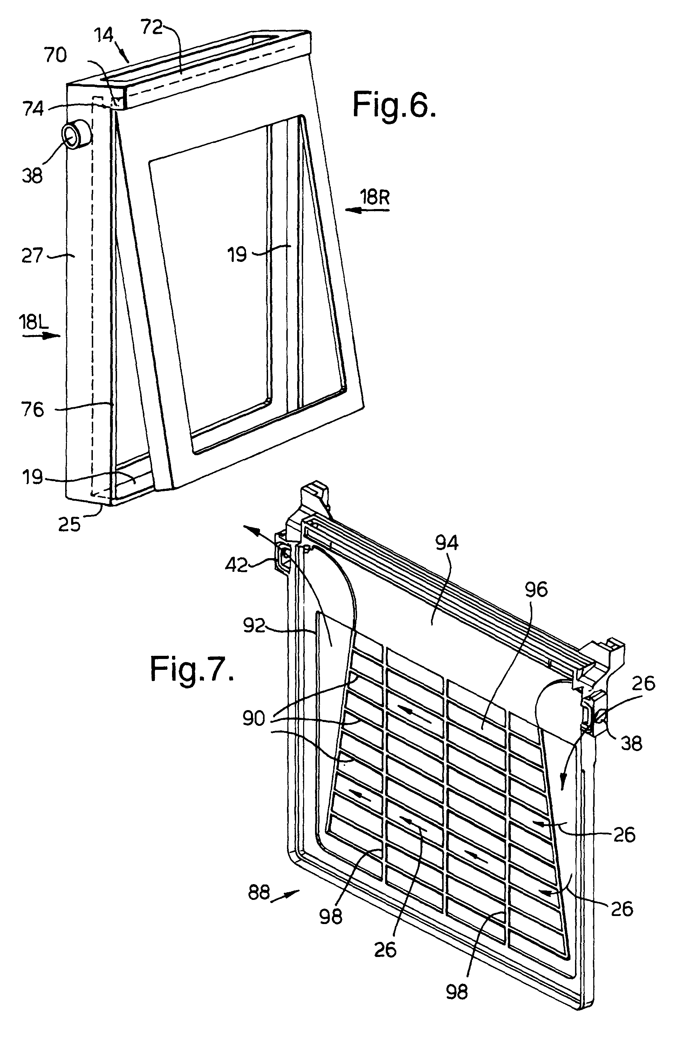

Seen in Fig. 6 is a cell detail of two spaced-apart inner walls 18L, 18R which together form housing 14. A matching left 18L and a right inner wall 18R are arranged to interlink. The left inner wall 18L has an upper channel 70 formed in the top 72 of said left inner wall 18L. A thin tongue 74 of the right inner wall 18R is shown engaged in channel 70. The left inner wall 18L has a peripheral frame-like opening 19 extending along both sides and the bottom. The right inner wall 18R is sized to fit into frame-like opening 19 and to be flush, when assembled, with the top edge 76 of frame-like opening 19. The interlinked walls 18L, 18R hold between them air electrodes, the zinc electrode and the electrolyte, as described with reference to Figs. 2 and 3, but these components, as well as the contact housing 3, are omitted herein for purposes of clarity.

Seen in FIG. 7 is detail of a cell 88 provided with means for directing the flow of reaction air 26 substantially in a uniform flow distribution across outer faces of both air electrodes 30 seen in Fig. 3.

Said means include a series of substantially horizontal rails 90 is supported in a window-like opening 92 in inner wall 94. The spaces formed between rails 90 define upper and lower walls of horizontal ducts 96 for directing reaction air 26, which is received from first inlet 38. After passing between the rails 90, reaction air 26 is directed towards second outlet 42.

In the shown preferred embodiment, a plurality of webs 98 extend in a vertical direction and interlink and reinforce rails 90. The webs 98 further provide support for air electrodes 30, which are mechanically weak. A further benefit of the webs 98 is in the creation of a more turbulent air flow in horizontal ducts 96, thus improving both cell efficiency and cell cooling.

It will be evident to those skilled in the art that the invention is not limited to the details of the foregoing illustrative embodiments and that the present invention may be embodied in other specific forms without departing from the essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A modular zinc-air cell for use in a multi-cell metal-air battery comprising
a housing having two outer major surfaces and two spaced-apart inner walls, said inner walls defining a first inner chamber for containing therein a zinc electrode, and in conjunction with said outer major surfaces defining two outer chambers for receiving reaction air;
two generally planar, gas-permeable, but liquid-impermeable air electrodes, each of said electrodes being installed in a window-like opening provided in each of said inner walls;
an electrolyte in contact with said zinc electrode and said air electrodes; and
means for directing a flow of said reaction air into a first inlet provided in a first outer side surface of said housing through both of said outer chambers substantially in a uniform flow distribution across the outer faces of both of said air electrodes, and out of a second outlet provided in an opposite outer side surface of said housing.

2. A modular cell according to claim 1, wherein a first of said inner walls is provided with a frame-like opening sized to receive and accommodate, in tight friction fit, a second of said inner walls, a bottom and opposing side surfaces of said first inner wall forming the base and sides of said housing respectively and a top portion of said first inner wall constituting a seamless upper portion of the assembled cell.

3. A modular cell according to claim 1, wherein said cell is provided with a single inlet and a single outlet for reaction air.

4. A modular cell according to claim 1, wherein said outer major surfaces of said cell housing are made of a plastic material.

5. A modular cell according to claim 1, wherein said means for directing said flow of reaction air substantially in a uniform flow distribution across said outer faces of both of said air electrodes comprises a series of substantially horizontal rails supported in said window-like opening in said inner wall, the spaces formed between said rails defining upper and lower walls of horizontal ducts directing said reaction air received from said first inlet towards said second outlet.

6. A modular cell according to claim 5, further comprising a plurality of webs extending in a vertical direction and interlinking and reinforcing said rails, and further providing support for said air electrodes, while creating a turbulent air flow in said horizontal ducts.

7. A modular cell according to claim 1, wherein each of said inner walls is provided with a peripheral recess sized to accept one of said two outer major surfaces and a window-like opening sized to accept one of said two air electrodes, each of said recesses and each of said openings serving to position one of said electrodes and one of said surfaces and to facilitate the formation of an air-impermeable joint between said outer surfaces and said peripheral recesses.

8. A modular cell according to claim 1, wherein said outer major surfaces are joined to said inner walls by ultrasonic welding.

9. A modular cell according to claim 1, further provided with a manifold arranged to feed reaction air to the sides of each cell.

10. A modular cell according to claim 1, wherein said outer surfaces comprise plastic sheets 0.3 to 1.5 mm thick of sufficient strength for protection of said air electrode from physical damage during cell handling.

11. A modular cell according to claim 1, wherein a first of said inner walls is provided with an integral cell contact housing containing a spring clip contact electrically connected via a metal conductor to contacts of the air electrode, said clip contact being adapted to receive flanges extending from an anode current collector member of an adjacent cell, wherein said integral cell contact housing is provided with a stepped configuration enabling nesting alignment between adjacent cells and the insertion of the flanges of a current collector member of an adjacent cell therein.

12. A modular cell according to claim 11, wherein said integral cell contact housing is sealed by a closure member.

13. A modular cell according to claim 12, wherein said integral cell contact housing and said closure member are formed of non-conductive, KOH-resistant plastic.

14. An electrochemical zinc-air multi-cell battery, each cell being of the type provided with
a housing having, two outer major surfaces, and two spaced-apart inner walls, said inner walls defining a first inner chamber for containing therein a zinc electrode, and in conjunction with said outer major surfaces defining two outer chambers for receiving reaction air;
two generally planar, gas-permeable, but liquid-impermeable air electrodes, each of said electrodes being installed in a window-like opening provided in each of said inner walls;
an electrolyte in contact with said zinc electrode and said air electrodes;
means for directing a flow of said reaction air into a first inlet provided in a first outer side surface of said housing through both of said outer chambers substantially in a uniform flow distribution across the outer faces of both of said air electrodes, and out of a second outlet provided in an opposite outer side surface of said housing; and
cooling air flow directing means for causing cooling air to flow between two adjacently positioned cells, along the outer faces of the major surfaces or two interfacing adjacent cells, said surfaces respectively being arranged to be in contact with and to cool said reaction air in each of the outer chamber bounded by said respective surfaces.

15. An electrochemical zinc-air multi-cell battery according to claim 14 wherein said cooling air flow directing means include blower means.

16. An electrochemical zinc-air multi-cell battery according to claim 12 wherein said cooling air flow directing means include vent means provided in said housing for directing natural air flow between said cells.

17. An electrochemical zinc-air multi-cell battery according to claim 14 wherein the flow rate of said cooling air exceeds the flow rate of said reactior air by a factor of at least two.

18. An electrochemical zinc-air multi-cell battery according to claim 14 further including a scrubber arranged to remove carbon dioxide from said reaction air before said reaction air enters said cells.

## Patentansprüche

1. Modulare Zink-Luft-Zelle zur Verwendung in einer Mehrzellen-Metall-Luft-Batterie mit:
einem Gehäuse mit zwei Hauptaußenseiten und zwei zueinander beabstandeten Innenwänden, wobei die Innenwände eine erste Innenkammer zur Aufnahme einer Zinkelektrode begrenzen und in Verbindung mit den Hauptaußenseiten zwei Außenkammern zur Aufnahme von Reaktionsluft begrenzen;
zwei im allgemeinen ebenen, gasdurchlässigen, jedoch flüssigkeitsundurchlässigen Luftelektroden, wobei jede der Elektroden in einer fensterartigen Öffnung, die in jeder der Innenwände vorgesehen ist, installiert ist;
einem Elektrolyt in Berührung mit der Zinkelektrode und den Luftelektroden; und
Mitteln zum Richten eines Stroms der Reaktionsluft in einen ersten Einlaß, der in einer ersten Außenseitenfläche des Gehäuses vorgesehen ist, durch die beiden Außenkammern im wesentlichen mit einer gleichförmigen Strömungsverteilung über die Außenseiten der beiden Luftelektroden, und aus einem zweiten Auslaß hinaus, der in einer gegenüberliegenden Außenseitenfläche des Gehäuses vorgesehen ist.

2. Modulare Zelle gemäß Anspruch 1, wobei eine erste Innenwand mit einer rahmenartigen Öffnung versehen ist, die so bemessen ist, daß in ihr in luftdich-ter Reibungspassung eine zweite Innenwand eingesetzt und aufgenommen ist, wobei ein Boden und einander gegenüberliegende Seitenflächen der ersten Innenwand jeweils die Basis und die Seiten des Gehäuses bilden, und ein oberer Teil der ersten Innenwand einen nahtlosen oberen Teil der zusammengebauten Zelle bildet.

3. Modulare Zelle gemäß Anspruch 1, wobei die Zelle für die Reaktionsluft mit einem einzigen Einlaß und einem einzigen Auslaß versehen ist.

4. Modulare Zelle gemäß Anspruch 1, wobei die Hauptaußenseiten des Zellengehäuses aus einem Kunststoffmaterial bestehen.

5. Modulare Zelle gemäß Anspruch 1, wobei die Mittel zum Richten des Reaktionsluftstroms mit im wesentlichen gleichförmiger Strömungsverteilung über die Außenflächen der beiden Luftelektroden eine Reihe von im wesentlichen horizontalen Schienen aufweisen, die in der fensterartigen Öffnung in der Innenwand aufgenommen sind, wobei die zwischen den Schienen gebildeten Abstände obere und untere Wände von horizontalen Leitungen definieren, die die Reaktionsluft, welche vom ersten Einlaß erhalten worden ist, auf den zweiten Auslaß richten.

6. Modulare Zelle nach Anspruch 5, weiterhin mit einer Anzahl von Bändern, die sich in vertikaler Richtung erstrecken und die Schienen miteinander verbinden und verstärken, und ferner Stützen für die Luftelektroden bilden, während sie in den horizontalen Leitungen einen turbulenten Luftstrom erzeugen.

7. Modulare Zelle nach Anspruch 1, wobei jede der Innenwände mit einer peripheren Aussparung versehen ist, die so bemessen ist, daß sie eine der zwei Hauptaußenseiten annimmt, und einer fensterartigen Öffnung, die so bemessen ist, daß sie eine der zwei Luftelektroden annimmt, wobei jede der Aussparungen und jede der Öffnungen dazu dient, eine der Elektroden und eine der Oberflächen zu positionieren und die Bildung einer luftundurchlässigen Verbindung zwischen den Außenseiten und den peripheren Aussparungen zu erleichtern.

8. Modulare Zelle gemäß Anspruch 1, wobei die Hauptaußenseiten mit den Innenwänden durch Ultraschallschweißen verbunden sind.

9. Modulare Zelle nach Anspruch 1, die weiterhin mit einem Verteilerrohr versehen ist, das zum Zuführen der Reaktionsluft zu den Seiten jeder Zelle angeordnet ist.

10. Modulare Zelle nach Anspruch 1, wobei die Außenseiten Plastikplatten mit einer Dicke von 0,3 bis 1,5 mm mit ausreichender Festigkeit für den Schutz der Luftelektrode gegenüber physikalischer Zerstörung während der Zellhandhabung aufweisen.

11. Modulare Zelle nach Anspruch 1, wobei eine erste Innenwand mit einem einstückigen Zellkontaktgehäuse versehen ist, welches einen Federclipkontakt aufweist, der über eine Metalleitung elektrisch verbunden ist, um die Luftelektrode zu kontaktieren, wobei der Clipkontakt so ausgebildet ist, daß er Flansche aufnehmen kann, die sich von einem Anodenstromkollektorelement einer benachbarten Zelle erstrecken, wobei das integrale Zellenkontaktgehäuse mit einer stufenförmigen Konfiguration versehen ist, damit die benachbarten Zellen ineinanderliegend fluch-ten und die Flansche eines Stromkollektorelementes einer benachbarten Zelle darin eingesetzt werden können.

12. Modulare Zelle nach Anspruch 11, wobei das integrale Zellenkontaktgehäuse durch ein Abschlußelement abgedichtet ist.

13. Modulare Zelle nach Anspruch 12, wobei das integrale Zellenkontaktgehäuse und das Abschlußelement aus nicht leitfähigem, KOH-resistentem Kunststoff bestehen.

14. Elektrochemische Mehrzellen-Zink-Luft-Batterie, wobei jede Zelle von einer Bauart ist, die versehen ist mit:
einem Gehäuse mit zwei Hauptaußenseiten und zwei zueinander beabstandeten Innenwänden, wobei die Innenwände eine erste Innenkammer zum Aufnehmen einer Zinkelektrode definieren und in Verbindung mit den Hauptaußenseiten zwei Außenkammern zur Aufnahme der Reaktionsluft definieren;
zwei im allgemeinen ebenen, gasdurchlässigen, jedoch flüssigkeitsundurchlässigen Luftelektroden, wobei jede der Elektroden in einer fensterartigen Öffnung, die in jeder der Innenwände vorgesehen ist, installiert sind;
einem Elektrolyt in Berührung mit der Zinkelektrode und den Luftelektroden;
Mitteln zum Richten des Reaktionsluftstroms in einen ersten Einlaß, der in einer ersten Außenseitenfläche des Gehäuses vorgesehen ist, durch die beiden Außenkammern im wesentlichen mit einer gleichförmigen Strömungsverteilung über die Außenflächen der beiden Luftelektroden, und aus einem zweiten Auslaß heraus, der in einer gegenüberliegenden Außenseitenfläche des Gehäuses vorgesehen ist; und
Kühlungsluft-Strömungsrichtmittel, die bewirken, daß Kühlluft zwischen zwei nebeneinander liegenden Zellen entlang der Außenflächen von zwei einander gegenüberliegenden, benachbarten Zellen fließt, wobei die Seiten jeweils so angeordnet sind, daß sie mit der Reaktionsluft in jeder der Außenkammern, die durch die jeweiligen Seitenflächen miteinander verbunden sind, in Berührung sind und diese kühlen.

15. Elektrochemische Mehrzellen-Zink-Luft-Batterie nach Anspruch 14, wobei die Kühlungsluftströmungsrichtmittel Gebläsemittel aufweisen.

16. Elektrochemische Mehrzellen-Zink-Luft-Batterie nach Anspruch 14, wobei die Kühlungsluftströmungsrichtmittel Abzugsmittel aufweisen, die in dem Gehäuse vorgesehen sind, um einen Umgebungsluftstrom zwischen die Zellen zu richten.

17. Elektrochemische Mehrzellen-Zink-Luft-Batterie nach Anspruch 14, wobei die Strömungsgeschwindigkeit der Kühlluft wenigstens um den Faktor zwei über der Strömungsgeschwindigkeit der Reaktionsluft liegt.

18. Elektrochemische Mehrzellen-Zink-Luft-Batterie nach Anspruch 14, weiterhin mit einem Gasreiniger, der vorgesehen ist, um vor dem Eintreten der Reaktionsluft in die Zellen aus der Reaktionsluft Kohlendioxid zu entfernen.

## Revendications

1. Pile zinc-air modulaire destinée à être utilisée dans une batterie métal-air à multiples piles comportant
un boîtier ayant deux surfaces principales extérieures et deux parois intérieures espacées, lesdites parois intérieures définissant une première chambre intérieure destinée à contenir dans celle-ci une électrode en zinc, et définissant, conjointement avec lesdites surfaces principales extérieures, deux chambres extérieures destinées à recevoir de l'air de réaction,
deux électrodes à air de manière générale planes, perméables aux gaz mais imperméables aux liquides, chacune desdites électrodes étant installée dans une ouverture analogue à une fenêtre agencée dans chacune desdites parois intérieures,
un électrolyte en contact avec ladite électrode en zinc et lesdites électrodes à air, et
des moyens pour diriger un écoulement dudit air de réaction dans une première entrée, agencée dans une première surface latérale extérieure dudit boîtier, à travers les deux dites chambres extérieures sensiblement dans une répartition d'écoulement uniforme sur les faces extérieures des deux dites électrodes à air, et à l'extérieur d'une seconde entrée agencée dans une surface latérale extérieure opposée dudit boîtier.

2. Pile modulaire selon la revendication 1, dans laquelle une première desdites parois intérieures est munie d'une ouverture analogue à un cadre dimensionnée pour recevoir une seconde desdites parois intérieures et s'adapter à celle-ci, par un agencement étanche avec frottement, des surfaces de fond et latérales opposées de ladite première paroi intérieure formant respectivement la base et les côtés dudit boîtier, et une partie supérieure de ladite première paroi intérieure constituant une partie supérieure sans soudure de la pile assemblée.

3. Pile modulaire selon la revendication 1, dans laquelle ladite pile est munie d'une entrée unique et d'une sortie unique destinées à de l'air de réaction.

4. Pile modulaire selon la revendication 1, dans laquelle lesdites surfaces principales extérieures dudit boîtier de pile sont fabriquées en matière plastique.

5. Pile modulaire selon la revendication 1, dans laquelle lesdits moyens pour diriger ledit écoulement d'air de réaction sensiblement en une répartition d'écoulement uniforme à travers lesdites surfaces extérieures des deux dites électrodes à air comportent une série de rails sensiblement horizontaux supportés dans ladite ouverture analogue à une fenêtre située dans ladite paroi intérieure, les espaces formés entre lesdits rails définissant des parois supérieures et inférieures de conduits horizontaux dirigeant ledit air de réaction reçu à partir de ladite première entrée vers ladite seconde sortie.

6. Pile modulaire selon la revendication 5, comportant de plus une pluralité de bandes s'étendant dans une direction verticale, et réunissant mutuellement et renforçant lesdits rails, et fournissant de plus un support auxdites électrodes à air, tout en créant un écoulement d'air turbulent dans lesdits conduits horizontaux.

7. Pile modulaire selon la revendication 1, dans laquelle chacune desdites parois intérieures est munie d'un évidement périphérique dimensionné pour recevoir une desdites deux surfaces principales extérieures, et d'une ouverture analogue à une fenêtre dimensionnée pour recevoir une desdites deux électrodes à air, chacun desdits évidements et chacune desdites ouvertures servant à positionner une desdites électrodes et une desdites surfaces, et à faciliter la formation d'une liaison imperméable à l'air entre lesdites surfaces extérieures et lesdits évidements périphériques.

8. Pile modulaire selon la revendication 1, dans laquelle lesdites surfaces principales extérieures sont reliées auxdites parois intérieures par soudure par ultrasons.

9. Pile modulaire selon la revendication 1, munie de plus d'un collecteur agencé pour alimenter de l'air de réaction vers les côtés de chaque pile.

10. Pile modulaire selon la revendication 1, dans laquelle lesdites surfaces extérieures comportent des feuilles de matière plastique ayant une épaisseur de 0,3 à 1,5 mm, suffisamment résistantes pour protéger ladite électrode à air d'une détérioration physique pendant une manipulation de la pile.

11. Pile modulaire selon la revendication 1, dans laquelle une première desdites parois intérieures est munie d'un boîtier de contact de pile en un seul bloc contenant un contact à pince élastique connecté électriquement via un conducteur métallique à des contacts de l'électrode à air, ledit contact à pince étant adapté pour recevoir des rebords s'étendant à partir d'un élément collecteur de courant d'anode d'une pile adjacente, dans laquelle ledit boîtier de contact de pile en un seul bloc est muni d'une configuration étagée, permettant un alignement par emboîtement entre des piles adjacentes, et l'insertion dans celui-ci des rebords d'un élément collecteur de courant d'une pile adjacente.

12. Pile modulaire selon la revendication 11, dans laquelle ledit boîtier de contact de pile en un seul bloc est fermé de manière hermétique par l'intermédiaire d'un élément de fermeture.

13. Pile modulaire selon la revendication 12, dans laquelle ledit boîtier de contact de pile en un seul bloc et ledit élément de fermeture sont fabriqués à partir d'une matière plastique non-conductrice résistant à la potasse (KOH).

14. Batterie électrochimique à multiples piles zinc-air, chaque pile étant du type muni de :
un boîtier ayant deux surfaces principales extérieures, et deux parois intérieures espacées, lesdites parois intérieures définissant une première chambre intérieure destinée à contenir dans celle-ci une électrode en zinc, et définissant, conjointement avec lesdites surfaces principales extérieures, deux chambres extérieures destinées à recevoir de l'air de réaction,
deux électrodes à air de manière générale planes, perméables aux gaz mais imperméables aux liquides, chacune desdites électrodes étant installée dans une ouverture analogue à une fenêtre agencée dans chacune desdites parois intérieures,
un électrolyte en contact avec ladite électrode en zinc et lesdites électrodes à air,
des moyens pour diriger un écoulement dudit air de réaction dans une première entrée, agencée dans une première surface latérale extérieure dudit boîtier, à travers les deux dites chambres extérieures sensiblement dans une répartition d'écoulement uniforme sur les faces extérieures des deux dites électrodes à air, et à l'extérieur d'une seconde sortie agencée dans une surface latérale extérieure opposée dudit boîtier, et
des moyens pour diriger un écoulement d'air de refroidissement destinés à entraîner de l'air de refroidissement à s'écouler entre deux piles positionnées de manière adjacente, le long des faces extérieures des surfaces principales de deux piles adjacentes situées en vis-à-vis, lesdites surfaces étant respectivement agencées pour être en contact avec ledit air de réaction, et pour refroidir celui-ci dans chacune des chambres extérieures délimitées par lesdites surfaces respectives.

15. Batterie électrochimique à multiples piles zinc-air selon la revendication 14, dans laquelle lesdits moyens pour diriger un écoulement d'air de refroidissement comportent des moyens formant souffleur.

16. Batterie électrochimique à multiples piles zinc-air selon la revendication 14, dans laquelle lesdits moyens pour diriger un écoulement d'air de refroidissement comportent des moyens de mise à l'air libre agencés dans ledit boîtier, pour diriger un écoulement d'air naturel entre lesdites piles.

17. Batterie électrochimique à multiples piles zinc-air selon la revendication 14, dans laquelle le débit d'écoulement dudit air de refroidissement dépasse le débit d'écoulement dudit air de réaction par un facteur d'au moins deux.

18. Batterie électrochimique à multiples piles zinc-air selon la revendication 14, comportant de plus un épurateur agencé pour enlever le dioxyde de carbone dudit air de réaction avant que ledit air de réaction n'entre dans lesdites piles.
